(19) **Europäisches Patentamt / European Patent Office / Office européen des brevets**

(11) **EP 4 348 157 B1**

(12) **EUROPEAN PATENT SPECIFICATION**

(45) Date of publication and mention
of the grant of the patent:
**18.03.2026 Bulletin 2026/12**

(21) Application number: **22731680.9**

(22) Date of filing: **03.06.2022**

(51) International Patent Classification (IPC):
**F41H 5/04** *(2006.01)*

(52) Cooperative Patent Classification (CPC):
**F41H 5/0485**

(86) International application number:
**PCT/EP2022/065270**

(87) International publication number:
**WO 2022/254041 (08.12.2022 Gazette 2022/49)**

(54) **HYBRID BALLISTIC-RESISTANT MOLDED ARTICLE**

HYBRIDER BALLISTISCH WIDERSTANDSFÄHIGER FORMKÖRPER

ARTICLE MOULÉ HYBRIDE PARE-BALLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2021 US 202163196911 P
21.03.2022 EP 22163255**

(43) Date of publication of application:
**10.04.2024 Bulletin 2024/15**

(73) Proprietor: **Avient Protective Materials B.V.
6167 RD Geleen (NL)**

(72) Inventors:
• **VAN ELBURG, Johann
6167 RD GELEEN (NL)**

• **VAN DER WERFF, Harm
6167 RD GELEEN (NL)**
• **STEEMAN, Reinard Jozef Maria
6167 RD GELEEN (NL)**
• **DICKINSON, Brad Alan
6167 RD GELEEN (NL)**
• **HEISSERER, Ulrich
6167 RD GELEEN (NL)**

(74) Representative: **Avient Protective Materials
Urmonderbaan 22
6167 RD Geleen (NL)**

(56) References cited:
**WO-A1-2012/004392     US-A1- 2021 088 312
US-B2- 10 655 940**

## Description

The invention relates to a hybrid ballistic-resistant molded article comprising a consolidated stack of at least two types of monolayers comprising oriented polymer. The embodiments are especially adapted to enable the manufacture of antiballistic articles, preferably curved antiballistic articles (e.g. curved ballistic resistant armor, helmets, radomes and the like). In preferred forms, the hybrid ballistic-resistant molded article has a multi-monolayer construction including one first portion formed of a first type of monolayers and one second portion formed of a multitude of a second type of monolayers, which second portion is positioned at the strike face, i.e. the side of the hybrid ballistic-resistant molded article that first faces the threat upon impact. The invention further relates to a hybrid ballistic-resistant molded article having improved ballistic performance when shot under an angle as compared to the ballistic performance of the respective types of monolayers. The invention also relates to a ballistic resistant sheet comprising one type of monolayers to form the hybrid molded article of the invention.

Hybrid ballistic-resistant molded articles are well known in the art. For example, ballistic resistant helmets, inserts for ballistic resistant vests and vehicle components may comprise molded articles comprising a consolidated stack of fibrous monolayer containing unidirectionally aligned high tenacity polyethylene filaments. A ballistic resistant article is for example known from WO2012/150169. In this publication a two-layer hybrid structure is disclosed comprised of a first layer comprising laminates with a first kind of yarn, and of a second layer comprising laminates with a second kind of yarn. The first kind of yarn and the second kind of yarn differ in linear density of the employed yarn.

A ballistic resistant molded article is also known from WO2008/077605. This publication discloses the manufacture of ballistic resistant sheets built up from monolayers with unidirectional polyethylene fibers and a matrix material. Furthermore a ballistic resistant molded article is disclosed based on compressed ballistic resistant sheets combined with a ceramic strike face, optionally with a metal layer between the ceramic strike face and the ballistic resistant sheet.

Compression molded articles comprising monolayers comprising oriented polymer are also well known in the art. EP1 699 954 describes such yarns of oriented polyethylene filaments, achieving strength of 4.0 GPa and above. EP1 699 954 exemplifies fibrous monolayers comprising yarns with a tensile strength of 4.1 GPa embedded in a rubber matrix, compression molded to form panels with good ballistic performance against diverse threats. Nevertheless EP'954 does not describe compression molded articles with different types of monolayers.

Other compression molded articles comprising monolayers comprising fibrous layers with oriented polyethylene polymer are known from WO13131996, describing a molded article comprising substantially matrix free fibrous layers while an adhesive layer of plastomer is present in-between the fibrous layers. WO13131996 claims achieving a good balance of energy absorption capability and delamination behavior of the therein described ballistic-resistant panels.

WO20127187 describes increasing the structural performance, for example flexural rigidity or back face deformation, of UHMWPE-based consolidated stacks of layers by adding hybridized layers comprising UHMWPE-fibers, a polymeric resin; and carbon fibers. Other ballistic-resistant molded articles are known from US10,655,940 B2 and US2021/088312 A1.

## Summary

Although the ballistic-resistant panels described in the prior art offer relevant improvements in the field, it was observed that the compression molded stacks of monolayers may be further improved with respect to their performance when shot under an angle. It was observed that panels prepared according to the prior art show satisfying performance with respect to a perpendicular shot with for example a bullet shot from an AK47 rifle such as the 7.62x39 mm Mild Steel Core. It was nevertheless found that these panels capable to meet severe standards, would show a serious deficiency against an angled shot, especially at low areal densities of the panel. Such deficiency may be experienced as a substantially lower V50 when measured under an impact angle of 30 degree compared to the V50 of the same panel when measured under a perpendicular impacts. Depending on the type of monolayers and panels tested, the present inventors observed typical performance drops of 10 to 30 %, often even more, especially when testing high-end ballistic panels known for their reduced areal weight and thickness. This deficiency of known ballistic-resistant panels may come as a surprise because when deviating from a perpendicular impact, the path length through the panel and the mass of perforated ballistic material increases and hence should the stopping power be superior when compared to the perpendicular situation engaging a lesser amount of ballistic material. Although the mechanical aspects of this phenomenon are far from been understood, such behavior of ballistic-resistant panels is observed especially when low areal density panels are tested against high energy threats such as the 7.62x39 Mild Steel Core (MSC) bullet commonly used in combination with the wide-spread AK47 weapon.

Accordingly it is the objective of the present invention to provide ballistic-resistant panels having improved antiballistic performance when shot at an angle, deviating by of 30° from a perpendicular impact. Such improvement can for example be seen as a lesser reduction of the V50 under said non-perpendicular conditions compared to the V50 under perpendicular conditions. The hybrid ballistic-resistant molded article according to the invention may show that the V50 measured under angled shot conditions (V50↘) is substantially better than predicted by the linear average of the V50↘ performance of the types of monolayers it comprises.

The present inventors have found that by combining monolayers comprising different amounts of oriented polymer into a hybrid stack of monolayers, the ballistic performance of the compression molded article is better than what the linear average of the individual performances would provide. Such performance is for example expressed as a better than expected V50 when shot under angle of 30° from perpendicular.

This objective is thus achieved by a ballistic-resistant molded article as defined by claim 1, comprising a consolidated stack comprising between 50 wt% and 95 wt% monolayers A and 5 wt% and at most 50 wt% monolayers B based on the total weight of monolayers A and monolayers B, the consolidated stack having an areal density (AD) of at least 7.0 and at most 15.0 kg/m$^2$, the monolayers A and the monolayers B comprising oriented polymer A and oriented polymer B respectively, whereby the direction of orientation of the oriented polymers of two adjacent monolayers in the stack differs by at least 40 and up to 90 degree, wherein the monolayers A have an areal density of between 28 and 80 g/m$^2$ of the oriented polymer A and the monolayers B having an areal density of between 4 and 28 g/m$^2$ of the oriented polymer B, wherein the areal density of the oriented polymer A in the monolayers A is at least 5 g/m$^2$ higher than the areal density of the oriented polymer B in the monolayers B.

Such hybrid ballistic-resistant molded article was found to outperform the behavior under an angled ballistic impact of molded articles of similar areal density but constructed solely from monolayers A. The provided solution to the encountered problem is counter-intuitive. In case the performance of a ballistic-resistant article is not sufficient, typically additional monolayers are added to boost the performance to the required level. The present inventors identified that it is not *per see* required to increase the amount of ballistic-resistant material but rather to replace a portion of monolayers A by a similar mass of monolayers B, i.e. with lesser amount of oriented polymer per monolayer. The obtained articles of improved ballistic performance are hence of similar over all weight while the ballistic improvement is superior to what would be expected based on the individual performance of the respective monolayers A and B.

## Brief description of Figures

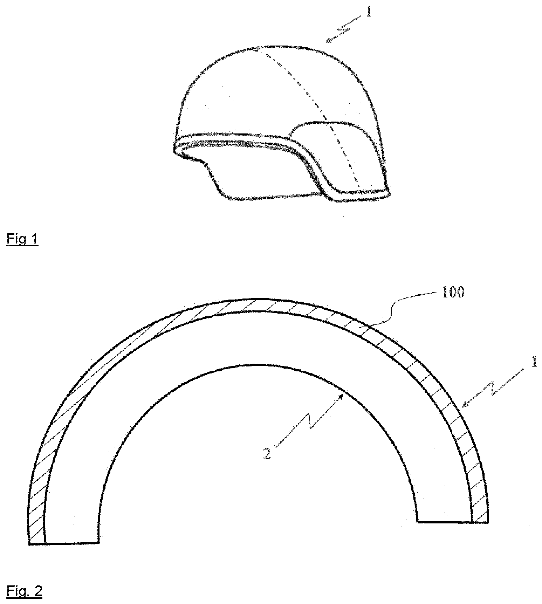

Figure 1 is a schematic view of a molded article, i.e., a protective ballistic resistant helmet (1), that may be fabricated from the consolidated hybrid ballistic resistant article of the embodiments described herein

Figure 2 is a schematic cross-sectional view of the consolidated hybrid ballistic resistant sheets of the embodiments described herein employed in the helmet (1) of figure 1 as taken along the dotted line therein. In figure 2 the shaded area (100) is the threat facing portion, also referred to as strike face, of the hybrid shell composed of monolayers B while (2) represents the portion of the hybrid shell composed of monolayers A.

Figure 3 shows top views of the testing setup to determine V50 performance of molded articles of the invention under perpendicular (Figure 3a) and non-perpendicular (Figure 3b) conditions. The figure is further described in the METHODS under Ballistic performance of molded articles.

Figure 4 schematically shows the testing setup of filament properties and is further described in the METHODS under *Determination of filament linear density and mechanical properties.*

## Detailed description

In the context of the present invention a molded article is understood to be an article that has been shaped by a compression resulting in a consolidation of a stack of monolayers into a shape such as a panel, a curved panel, a helmet shell or the like. Consolidation may be done by the use of pressure and temperature on a stack of monolayers, or preassembled sheets comprising said monolayers. Pressure for consolidation generally ranges from 2-1000 bar while temperature during consolidation typically is in the range from 60 to 150 °C.

By monolayers are herein understood layers comprising a polymer that is substantially oriented in a single direction, i.e. the direction of orientation of the polymer. The oriented polymer may be present in the form of films, tapes or filaments. The monolayers, also referred to as unidirectional monolayers, may further comprise a binder that may hold the films, tapes or filaments together. Said films, tapes or filaments comprise a polymer that is substantially oriented in one direction, the direction of elongation, or machine direction, of the film, tapes or filaments.

In the context of the present invention, the unidirectional monolayers comprise oriented polymers. Preferably the oriented polymers present in the monolayer A and monolayer B are individually selected from the group consisting of polyolefins e.g. polyethylene, polyesters, polyvinyl alcohols, polyacrylonitriles, polyamides or polyketone. Suitable polyamides are, for example, the aliphatic polyamides PA-6, PA-6,6, PA-9, PA-11, PA-4,6, PA-4,10 and copolyamides thereof and semi-aromatic polyamides based on for example PA-6 or PA-6,6 and aromatic dicarboxylic acids and aliphatic diamines, for example isophthalic acid and terephthalic acid and hexanediamine, for example PA-4T, PA-6/6,T, PA-6,6/6,T, PA-6,6/6,T and PA-6,6/6,I/6,T. Preferably PA-6, PA-6,6 and PA-4,6 are chosen. Furthermore, also polyamide blends are suitable.

Suitable thermoplastic polyesters are, for example, poly(alkylene terephthalate)s, like polybutyleneterephthalate (PBT), polytrimethyleneterephthalate (PTT), polyethyleneterephthalate (PET), polycyclohexanedimethyleneterephthalate (PCT), and poly(alkylene naphthanate)s, like polyethylenenaphthanate (PEN), and copolymers and mixtures.

Preferably the monolayers and monolayers B of the present invention comprise a polyolefin, more preferably a polyethylene and most preferably an ultra-high molecular weight polyethylene.

Particularly preferred are molded articles according to the invention whereby the polymers in the monolayers A and monolayers B comprises ultra-high molecular weight polyethylene or polyamide. These polymers yield the best antiballistic performance.

The ultra-high molecular weight polyethylene may be linear or branched, although preferably linear polyethylene is used. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR. The linear polyethylene may further contain up to 5 mol% of one or more other alkenes that are copolymerisable therewith, such as propene, butene, pentene, 4-methylpentene, octene. Preferably, the linear polyethylene is of high molecular weight with an intrinsic viscosity (IV, as determined on solutions in decalin at 135°C) of at least 4 dl/g; more preferably of at least 8 dl/g, even more preferably of at least 10 dl/g and most preferably of at least 12 dl/g. Such polyethylene is also referred to as ultra-high molecular weight polyethylene. Typically ultra-high molecular weight polyethylenes have an IV of at most 50, more preferably of at most 45 and most preferably of at most 40 dl/g. Intrinsic viscosity is a measure for molecular weight that can more easily be determined than actual molar mass parameters like Mn and Mw.

By film and tape are herein understood elongated bodies having a length dimension, a width dimension and a thickness dimension, wherein the length dimension of the film or tape is at least about the same as its width dimension but preferably greater than its width dimension, and wherein said length dimension is much greater than its thickness dimension. Preferably, the term tape also comprises the embodiments of a ribbon, a strip, In a preferred embodiment, the width dimension of the tape is much greater than its thickness dimension. Preferably the ratio of width to thickness is at least 10, more preferably at least 50, even more preferably at least 10, and most preferably at least 500. Typically tapes have a width of at least 2 mm, preferably at least 10 mm, more preferably at least 50 mm and most preferably at least 100 mm, while preferably tapes may have a width of at most 500 mm, preferably of at most 400 mm. Generally the term tape is employed when the elongated body is not sufficiently wide to span the entire width of the monolayer, e.g. when more than the width of a single tape is needed to build a single monolayer. The term film is used in particular when the width of the elongated body reaches the width dimension of the monolayers it is present in such that a single film suffices to span the breath of the monolayer and accordingly a monolayer may comprise a single film or several stacked films.

The tape present in the unidirectional monolayers of the invention comprises oriented polymer and is hence anisotropic. By anisotropic is meant in the context of the present application that two mutually perpendicular directions can be defined in the plane of the tape for which the modulus of elasticity in a first direction is at least 3 times higher than the modulus of elasticity in the direction perpendicular to it. Generally said first direction of the preferably anisotropic polymeric tape layers represents the direction of orientation of the polymer an in the art is also referred to as machine direction or drawing direction (or as direction of orientation) and typically has the highest mechanical properties. A method of preparing such anisotropic tapes or films is disclosed for example in WO2010/066819.

In a preferred embodiment, at least part of the unidirectional monolayers contained by the molded article of the invention comprise a single tape or film having a length and a width about the same as the length and width of the article. Hereinafter, for the purpose of this embodiment such a tape is referred to as film. The dimensions of width and length of the film are thus dependent on the dimensions of the article of the invention, which in turn are dependent on its application. The skilled person can routinely determine the lateral dimensions of said film.

In another preferred embodiment, at least part of the unidirectional monolayers contained in the molded article of the invention comprise each a plurality of tapes. More preferably all monolayers A and/or all monolayers B contained in the molded article of the invention comprise a plurality of tapes. Preferably, the tapes forming said monolayers have a width of between 10 mm and 500 mm, more preferably between 20 mm and 400 mm, most preferably between 40 mm and 200 mm. In such monolayers, the plurality of tapes may be positioned unidirectionally next to each other without overlapping, the tapes may also be arranged to partially overlap with adjacent tapes. The unidirectionally aligned tapes may also be stacked with each other in an organized or non-structured way.

A method for the production of the tapes comprises feeding a polymeric powder between a combination of endless belts, compression-molding the polymeric powder at a temperature below the melting point thereof and rolling the resultant compression-molded polymer followed by drawing. Such a method is for instance described in US 5,091,133. If desired, prior to feeding and compression-molding the polymer powder, the polymer powder may be mixed with a suitable liquid organic compound having a boiling point higher than the melting point of said polymer. Compression molding may also be carried out by temporarily retaining the polymer powder between the endless belts while conveying them. This may for instance be done by providing pressing platens and/or rollers in connection with the endless belts.

A preferred method for the production of the tapes comprises feeding a polymer to an extruder, extruding a tape at a temperature above the melting point thereof and drawing the extruded polymer tape below its melting temperature. If desired, prior to feeding the polymer to the extruder, the polymer may be mixed with a suitable liquid organic compound, for instance to form a gel, such as is preferably the case when using ultra high molecular weight polyethylene.

In yet another preferred method the tapes are prepared by a gel process. A suitable gel spinning process is described in for example GB-A-2042414, GB-A-2051667, EP 0205960 A and WO 01/73173 A1, and in "Advanced Fibre Spinning Technology", Ed. T. Nakajima, Woodhead Publ. Ltd (1994), ISBN 185573 182 7. In short, the gel spinning process comprises preparing a solution of a polymer of high intrinsic viscosity, extruding the solution into a tape at a temperature above the dissolving temperature, cooling down the film below the gelling temperature, thereby at least partly gelling the tape, and drawing the tape before, during and/or after at least partial removal of the solvent.

In the described methods to prepare tapes, the drawing, preferably uniaxial drawing, of the produced tape may be carried out by means known in the art. Such means comprise extrusion stretching and tensile stretching on suitable drawing units. To attain increased mechanical strength and stiffness, drawing may be carried out in multiple steps. In case of the preferred ultra-high molecular weight polyethylene tapes, drawing is typically carried out uniaxially in a number of drawing steps. The first drawing step may for instance comprise drawing to a stretch factor of 3. Multiple drawing may typically result in a stretch factor of 9 for drawing temperatures up to 120°C, a stretch factor of 25 for drawing temperatures up to 140°C, and a stretch factor of 50 for drawing temperatures up to and above 150°C. By multiple drawing at increasing temperatures, stretch factors of about 50 and more may be reached. This results in high strength tapes, whereby for tapes of ultra-high molecular weight polyethylene, strengths of 1.8 GPa and more may be obtained.

Yet another preferred method for the preparation of the tapes comprises mechanical fusing of unidirectional oriented fibers under a combination of pressure, temperature and time. Such a tape, also called fibrous tape, and a method to prepare such a tape are described in EP2205928. Preferably the unidirectional oriented filaments are ultra-high molecular weight polyethylene (UHMWPE) filaments. UHMWPE filaments prepared by a gel spinning process, such as described, for example, in GB 2042414 A or WO 01/73173 A1, are preferably used. A gel spinning process essentially consists of preparing a solution of a linear polyethylene with a high intrinsic viscosity, spinning the solution into filaments at a temperature above the dissolving temperature, cooling down the filaments to below the gelling temperature, such that gelling occurs, and stretching the filaments before, during and/or after the removal of the solvent. A UHMWPE tape prepared by mechanical fusing of fibers yields particularly good antiballistic properties.

The areal density of the tapes present in the monolayers A of the present invention does not exceed 80 $g/m^2$, more preferably does not exceed 70 $g/m^2$, even more preferably does not exceed 60 $g/m^2$ and most preferably does not exceed 50 $g/m^2$ while the areal density is at least 28 $g/m^2$, more preferably at least 30 $g/m^2$, even more preferably at least 35 $g/m^2$ and most preferably at least 40 $g/m^2$. The preferred areal densities of this embodiment are suited for tapes of the monolayers A, providing robust and economic solutions for ballistic performance of the molded article of the invention. In another embodiment outside of the scope of the invention, the areal density of the tape, e.g. present in the monolayers A, does not exceed 28 $g/m^2$, preferably does not exceed 26 $g/m^2$, more preferably does not exceed 25 $g/m^2$ even more preferably does not exceed 24 $g/m^2$ and most preferably does not exceed 22 $g/m^2$ while in this embodiment the areal density will preferably be at least 4 $g/m^2$, more preferably at least 6 $g/m^2$, even more preferably at least 8 $g/m^2$ and most preferably at least 10 $g/m^2$. The preferred areal densities of this embodiment are suited for tapes present in the monolayers B, and may provide superior ballistic performance of the molded article of the invention.

A yarn for the purpose of the invention is an elongated body containing at least 2 individual filaments, preferably at least 10, 100 or even more filament. By filament is herein understood an elongated body, the length dimension of which is much greater than the transverse dimensions of width and thickness. Typically a filament is referred to as having a continuous length. In the context of the present invention, filament may as well be referred to as fiber. The in the art recognized form factor of staple fibers having discontinuous length is not considered a filament in the context of the present invention. A filament may have regular or irregular cross-sections, typically the cross-section is circular, but may also be oval, or oblong.

The monolayer A and monolayer B may each or both comprise unidirectionally aligned filaments comprising an oriented polymer, herein after referred to as oriented polymer A and oriented polymer B respectively. The filaments may be the same or different from one another and may be selected from the group consisting of aromatic polyamide filaments, liquid crystalline polymer and ladder-like polymer filaments, polyolefin filaments, polyvinyl alcohol filaments, and polyacrylonitriles filaments. According to some embodiments, at least one of first monolayers or second monolayers are formed of ultra high molecular weight (UHMW) polyethylene filaments, poly(2,6-diimidazo[4,5-β-4',5'-ε]pyridinylene-1,4-(2,5-dihydroxy)phenylene) filaments, preferably of ultra-high molecular weight (UHMW) polyethylene fibers. In an even more preferred embodiment both the first and the second monolayers comprise ultra-high molecular weight (UHMW) polyethylene fibers. Preferably the UHMW polyethylene fibers are made from ultra-high molecular weight polyethylene with an intrinsic viscosity (IV), of at least 4 dl/g; more preferably of at least 8 dl/g, even more preferably of at least 10 dl/g and most preferably of at least 12 dl/g. Such polyethylene is also referred to as ultra-high molecular weight polyethylene. Typically ultra-high molecular weight polyethylenes have an IV of at most 50, more preferably of at most 45 and most preferably of at most 40 dl/g.

One method for the production of the filaments used in the invention comprises feeding the polyethylene to an extruder, extruding a filament at a temperature above the melting point thereof and drawing the extruded filament below its melting temperature. If desired, prior to feeding the polymer to the extruder, the polymer may be mixed with a suitable liquid compound, for instance to form a gel, such as is preferably the case when using ultra high molecular weight polyethylene.

In a preferred method the filaments used in the invention are prepared by a gel spinning process. A suitable gel spinning process is described in for example GB-A-2042414, GB-A-2051667, EP 0205960 A and WO 01/73173 A1. In short, the gel spinning process comprises preparing a solution of a polyethylene of high intrinsic viscosity, extruding the solution into a solution-filament(s) at a temperature above the dissolving temperature, cooling down the solution-fiber below the gelling temperature, thereby at least partly gelling the polyethylene of the filament, and drawing the filaments before, during and/or after at least partial removal of the solvent.

In the described methods to prepare high tenacity filaments drawing, preferably uniaxial drawing, of the produced filaments may be carried out by means known in the art. Such means comprise extrusion stretching and tensile stretching on suitable drawing units. To attain increased mechanical tensile strength and stiffness, drawing may be carried out in multiple steps.

In case of the preferred UHMWPE filaments, drawing is typically carried out uniaxially in a number of drawing steps providing orientation to the polymer. The first drawing step may for instance comprise drawing to a stretch factor (also called draw ratio) of at least 1.5, preferably at least 3.0. Multiple drawing may typically result in a stretch factor of up to 9 for drawing temperatures up to 120°C, a stretch factor of up to 25 for drawing temperatures up to 140°C, and a stretch factor of 50 or above for drawing temperatures up to and above 150°C. By multiple drawing at increasing temperatures, stretch factors of about 50 and more may be reached. This results in high tenacity polyethylene filaments, whereby for ultrahigh molecular weight polyethylene, tenacities of 2.0 N/tex to 6.0 N/tex and more may be obtained.

The filaments in the monolayers of the ballistic resistant molded article of the invention will preferably have a tenacity of at least 1.5 N/tex, more preferably at least 2.0 N/tex, even more preferably at least 2.5 N/tex and even more preferably at least 3.0 N/tex. The maximum tenacity may be up to about 6.0 N/tex. Generally the tenacity will be less than 7.0 N/tex. Some embodiments will employ filaments having a tenacity of between about 2.5 and about 5.0 N/tex. Other embodiments will employ filaments having a tenacity of between about 4.0 and about 5.0 N/tex. According to some embodiments, the fibers will exhibit a tenacities of between 3.0 and 4.0 N/tex, more preferably between 3.2 and 3.8 N/tex or most preferably between 3.3 and 3.7 N/tex. This tenacity is determined (at 25°C) as described in the Methods.

Preferably the tapes and or filaments present in the monolayers A and monolayers B are high performance tapes or filament. By high performance is herein understood that said tapes of filaments have a tenacity of at least 2.0 N/tex, preferably at least 2.2 N/tex and most preferably at least 2.5 N/tex. Such high tenacity filaments or tapes are known in the art as providing relevant anti-ballistic performance and are hence also called ballistic filaments or tapes. Although there is no reason for limiting the tenacity of the tapes or filaments present in the monolkayers, the currently known products may have a tenacity limited to levels such as at most 8.0 N/tex or even at most 7.0 N/tex or even at most 6.0 N/tex.

Preferably the tapes and filaments of the monolayers comprise oriented polyethylene, preferably ultra-high molecular weight polyethylene, therefor a preferred embodiment of the present invention concerns ballistic-resistant molded articles wherein the monolayers A contain unidirectionally aligned tapes or filaments of oriented polyethylene, preferably oriented UHMWPE, said tapes or filaments having a tenacity of at least 2.0 N/tex, preferably at least 2.2 N/tex and most preferably at least 2.5 N/tex.

It was further observed that monolayers with superior ballistic resistant strength are more suitable to be employed as monolayers B in the present invention, providing hybrid molded articles with a better balance of cost versus performance, Therefor a preferred embodiment of the present invention concerns a molded ballistic-resistant article wherein the monolayers B contain unidirectionally aligned tapes or filaments of oriented polymer B, said tapes or filaments having a tenacity of at least 2.5 N/tex. Preferably the tapes or filaments of oriented polymer of monolayer B have a tenacity of at least 2.8, more preferably at least 3.0 and most preferably at least 3.5 N/tex. In a further preferred embodiments of the ballistic-resistant molded article of the invention the oriented polymer of the filaments or tapes of the monolayers B is polyethylene, more preferably UHMWPE, therefor the preferred embodiment concerns monolayers B contain unidirectionally aligned tapes or filaments of oriented polyethylene, herein also referred to as polyethylene filaments or tapes, said tapes or filaments having a tenacity of at least 3.5 N/tex. Preferably the tapes or filaments of oriented polyethylene of monolayer B have a tenacity of at least 3.8, more preferably at least 4.0, even more preferably at least 4.2, yet more preferably at least 4.5 N/tex and most preferably at least 4.8 N/tex. The skilled person will be aware that there are theoretical and practical limits to the tenacity of the polyethylene filaments or tapes, therefor the polyethylene filaments or tapes preferably have a tenacity of at most 8.0, preferably at most 7.0, more preferably at most 6.0 N/tex. Preferred the polyethylene is ultra-high molecular weight polyethylene (UHMWPE). Best results were obtained when the polyethylene filaments or tapes comprise ultra-high molecular weight polyethylene (UHMWPE) and have a tenacity of at least 3.5 N/tex, more preferably at least 4.0 N/tex and most preferably at least 4.2 N/tex. The inventors observed that for UHMWPE the best ballistic performances could be achieved.

In a preferred embodiment, the filaments or tapes in the monolayer B have a tenacity that is at least 10%, i.e. 1.10 times, higher than the tenacity of the filaments or tapes in the monolayers A. More preferably the filaments or tapes in the monolayer B have a tenacity that is at least 20% higher than the tenacity of the filaments or tapes in the monolayers A. Even more preferably the filaments or tapes in the monolayer B have a tenacity that is at least 30% higher than the tenacity of the filaments or tapes in the monolayer A. Generally the filaments or tapes in the monolayers B face have a tenacity that is less than 200%, preferably less than 150% of the tenacity of the filaments or tapes in the monolayer A.

The filaments present in the monolayers A and/or B may have a linear density, typically referred to as titer, of at most 10 dtex, preferably at most 6.0 dtex, more preferably at most 4.0 dtex, even more preferably of at most 3.0 and most preferably of at most 2.0 dtex. It was observed that filaments with lower titers show improved ballistic performance and allow manufacture of monolayers with less performance variations. In a further preferred embodiment, the filaments present in the monolayers A and/or B have a linear density of at least 0.10 dtex, preferably at least 0.20 dtex and most preferably at least 0.40 dtex. Such lower limits are caused by economics and technology of current manufacturing processes.

The monolayers A and monolayers B may optionally comprise a binder material, in the art also referred to as matrix or adhesive. The term binder material refers to a material that binds or holds the filaments or tapes together. It may enclose the filaments in their entirety or in part and it may act to connect stacked tapes to each other, such that the structure of the monolayer is retained during handling and e.g. making of precursor sheets, sub-sheets or ballistic resistant sheets. The binder materials present in the monolayers A and/or monolayers B, respectively referred to as binder A and binder B, may comprise at most 20 wt% compared to the mass of oriented polymer present in said monolayers. In a preferred embodiment, the amount of binder material in the monolayers A and/or monolayers B ranges from 4 to 18 weight%. More preferably the amount of binder material in the monolayers A and/or monolayers B ranges from 5 to 16 weight%. Accordingly, in a preferred embodiment of the invention the monolayers A comprise between 5.0 and 20 wt% of a binder A, based on the weight of the oriented polymer A present in monolayer A and/or the monolayers B comprise between 5.0 and 20 wt% of a binder B, based on the weight of the oriented polymer B present in monolayer B.

The total amount of binder present in the compression molded article of the invention is preferably less than 20.0 wt% based on the weight of the article. Preferably, the total amount of binder present in the ballistic-resistant article is from 6.0 to 18.0 wt.% based on the total weight of the article. More preferably, the total amount of binder present is from 7.0 to 17.0 wt%; and most preferably from 8.0 to 16.0 wt.% based on the total weight of the stack.

The amount of binder materials of the monolayer B may be 0 wt%, but is preferably at least 1 wt% of the mass of the oriented polymer present in the monolayer. More preferably the binder material of the monolayer B is at least 3 wt%, most preferably the binder materials of the monolayer B is at least 5 wt% of the mass of the oriented polymer of the monolayer B.

The binder material employed in at least one of the monolayers A or B may be a elastomeric matrix material which matrix material will typically have a tensile modulus (i.e. secant modulus measured at about 23°C according to ISO 527 at a strain of 100%) of less than about 3 MPa, sometimes less than about 2.5 MPa, for example less than about 2.0 MPa. This would lead to a further improved ballistic resistant molded article. According to some embodiments, the elastomeric matrix material may have a tensile modulus of less than about 1.5 MPa.

The elastomeric matrix may be comprised of at least one material selected from the group consisting of polybutadiene, polyisoprene, natural rubber, ethylene-propylene copolymers, ethylene-propylene-diene terpolymers, polysulfide polymers, polyurethane, polyurethane elastomers, modified polyolefins, chlorosulfonated polyethylene, polychloroprene, plasticized polyvinylchloride, butadiene acrylonitrile elastomers, poly(isobutylene-co-isoprene), polyacrylates, polyesters, polyethers, fluoroelastomers, silicone elastomers, thermoplastic elastomers, and ethylene copolymers. According to some embodiments, the elastomeric matrix material may comprise a block copolymer of a conjugated diene and a vinyl aromatic monomer. In this regard, the conjugated diene may be butadiene or isoprene while the vinyl aromatic monomer may be styrene, vinyl toluene or t-butyl styrene.

In alternative embodiments, the binder material employed in at least one of the monolayers A or B will typically have a tensile modulus that is higher than the tensile modulus of the matrix material employed in the respective other monolayer B or A. Preferably this tensile modulus (i.e. secant modulus measured at about 23°C according to ISO 527 at a strain of 100%) is at least 3 MPa or greater, for example a tensile modulus of at least about 5 MPa or greater, e.g., up to about 500 MPa. This binder material may be at least one selected from the group consisting of acrylates, polyurethanes, polyolefins - preferably polyethylene, modified polyolefins and ethylene vinyl acetate. Preferably, this binder material contains a polyurethane or modified polyethylene.

Particularly suitable are those binder materials that can be applied as a dispersion in water. Examples of suitable thermoplastic materials that may be employed as the matrix material include (poly)acrylates, polyurethanes, polyolefins - preferably polyethylene, modified polyolefins, (poly)ethylene vinyl acetate and ethylene acrylic acid copolymers as well as combinations and derivatives thereof.

Some embodiment of the invention concern molded articles wherein the monolayers A and /or monolayers B are fibrous monolayers. By the term fibrous monolayer is herein understood a monolayer comprising filaments, i.e. obtained by a process wherein filaments are used as a precursor material. The filaments in a fibrous monolayer may still be discernable in said monolayers and its derived products like sheets and panels. By discernable is understood that filaments can be identified by inspection of a monolayer or its cross-section by the eye or microscopy. The filaments may have been mechanically modified or not. A fibrous monolayer is structurally different from a non-fibrous monolayer, which may for example be obtained by compressing polymeric powders or spinning a solution or a melts of polymers to form a film or tape as described above. In such latter monolayers, no filaments are discernable and/or no filaments have been employed to produce the monolayers. The cross-section of a fibrous monolayer according to the invention, ideally if observed with a microscope, possesses boundaries between the filaments forming the monolayer. There may be a polymeric matrix present in between the filaments of the monolayers. In one embodiment of the invention the fibrous monolayer is substantially free of a matrix between the filaments of the monolayers. Accordingly fibrous monolayers in the context of the present invention stand in contrast to other ballistic resistant form factors such as unidirectionally aligned tapes or films.

Preferably, the thickness of the monolayers A and/or B comprising unidirectionally aligned filaments of oriented polymer, preferably oriented polyethylene, is at least 1.0, more preferably at least 1.3, most preferably at least 1.5 times the thickness of a polyethylene filament. If polyethylene filaments with different thicknesses are used, by the thickness of a filament is herein understood an average thickness of the filaments present in the monolayer. The thickness of filaments may be measured by means known to the skilled person, for example by evaluating cross-section of monolayers or by deriving it from the filament titer. Preferably, the maximum thickness of said layer is no more than 20, more preferably no more than 10, even more preferably no more than 5 and most preferably no more than 3 times the thickness of an individual filaments.

In the context of the present invention, the term unidirectional monolayer refers to a layer comprising unidirectionally oriented polymer, preferably the unidirectional polymer forms fibers or tapes wherein the fibers or tapes comprising the oriented polymer are essentially oriented parallel to one another. A unidirectional monolayer may contain one or more superimposed parallel filaments or tapes to make up the thickness of said unidirectional monolayer.

The compression molded article of the invention comprises a plurality of monolayers adjacent one to another while the direction of orientation of the polymer of the monolayers being rotated with a certain angle with respect to the direction of the orientation of the polymer in the adjacent monolayers. Said angle is at least 40° and up to 90°, more preferably the angle is at least 70°, more preferably at least 80° and most preferably the angle is about 90°.

The compression molded article of the invention may have been obtained by stacking the required amount of corresponding monolayers, nevertheless, the stack may have been built from pre-assembled sheets comprising at least 2 of said monolayers. The pre-assembled sheets, also referred to in the art as precursor sheets or prepregs, sheet may comprise more than 2 monolayers comprising oriented polymer, whereby the direction of polymer orientation in each monolayer is being rotated with respect to the filament direction in an adjacent monolayer by an angle of at least 40° as indicated above. Preferably a set of 2, 4, 6, 8 or 10 monolayers may be pre-assembled, such that the direction of orientation of the polymer in each monolayer is rotated with respect to the direction of orientation of the polymer in an adjacent monolayer, followed by consolidation of the stack of monolayers to a sheet, such that the sheet contains oriented polymer in substantially two directions of orientations, also called the 0° and the 90° orientation. Consolidation of the pre-assembled sheet may be done by the use of pressure and temperature to form the sheet. Pressure for consolidation generally ranges from 2-1000 bar while temperature during consolidation typically is in the range from 60 to 150 °C.

The compression molded article of the invention comprises a consolidated stack of monolayers A and monolayers B whereby the weight of monolayers A is between 50 wt% and 95 wt% of the total weight of monolayers in the article and the weight of monolayers B is between 5 wt% and 50 wt% of the total weight of monolayers in the article. Preferably the stack comprising between 60 wt% and 90 wt% monolayers A and between 10 wt% and 40 wt% monolayers B, more preferably between 66 wt% and 85 wt% monolayers A and between 15 wt% and 34 wt% monolayers B, based on the total weight of monolayers A and monolayers B. Compression molded article with such preferred ratios tend to have better cost performance profile in that less high quality monolayers B are required to achieve a envisioned improvement.

The stacking of the layers of type A and B may be performed in any order, such as random, alternating, clustered, gradient or segregated. By layer is here understood the monolayers A or B or the here above mentioned pre-assembled sheets of monolayers A or B. By random is understood that layers A and B are following each other in a random manner, i.e. that the type of a layer in the stack is not depending upon the earlier one. By alternating is understood that layers A and B are following each other in a regular pattern. By clustered is understood that large number of respectively layers A and layers B will be adjacent to each other, forming clusters of layers A and layers B which clusters of layers A and layers B may further be arranged towards one another in an alternating or random order. The number of monolayers A or B in a cluster may largely vary from for example 10 monolayers up to half or substantially all monolayers of one type being present in the molded article. By substantially all is understood that at least 95%, preferably at least 98% and most preferably all concerned monolayers. By gradient is understood that the number and/or mass of layers B will be heterogeneously distributed across the stack, such that one side of the stack is richer, while the other side of the stack is depleted in monolayers of type B. Such gradient may be combined with a random or clustered stacking principle. By segregated is understood that monolayers A and B are hardly mixed in the stacking order. In other words, substantially all monolayers of one type are grouped to one or more sub-stacks, while the sub-stacks are assembled to form the molded article. Preferably the molded article would comprise one or more areas of monolayers of type A and one or more areas of monolayers B. In a preferred embodiment, the ballistic-resistant molded article has at least 50 wt% of the monolayers B stacked adjacent to one another, forming a sub-stack of monolayers B, preferably at least 80 wt% of the monolayers B form a sub-stack of monolayers B, more preferably substantially all monolayers B form a sub-stack of monolayers B. The inventors identified that by segregating the monolayers from one another, i.e. forming sub-stacks of the types of monolayer, the ballistic performance of the molded article could be further improved. Preferably the molded article of the invention has a gradient wherein the monolayers B are more abundant at one outside surface of the ballistic-resistant article, preferably the strike face of the article. In a further preferred embodiment, the ballistic-resistant molded article of the invention comprises at least one sub-stack comprising at least 50%, preferably at least 80% more preferably substantially all monolayers B being located at an outside surface of the molded article, preferably the sub-stack of monolayers B forms the strike-face of the molded article.

By areal density (AD) is understood the weight of a given area divided by its surface area, expressed in kilogram per square meter [kg/m$^2$] or gram per square meter [g/m$^2$]. For substantially flat articles, the weight of a sample may be divided by its area, nevertheless, a more general method is provided to account for curved and more complex shaped articles by multiplying the average thickness by the density of the molded article. As used herein, average thickness is measured by taking at least 5 measurements distributed over the article, each measurement spaced apart from the other measurements by at least 5 cm, and calculating the mean value. As used herein, density of the molded article is measured by weighing a sample of the compression molded article and dividing it by the volume of said sample. In some embodiments it is referred to the areal density of a component, such as the oriented polymer, hereby is understood the weight of this component in an area, divided by said area. Alternatively the areal density of a component may be calculated by multiplying the areal density of the concerned portion by the weight fraction of the concerned component in said portion. The consolidated stack of the invention has an areal density (AD) of at least 7.0 and at most 15.0 kg/m$^2$. It was observed that state of the art panels, for example panels capable to meet severe standards, show a deficiency against angled shots. The inventors identified that such deficiencies become more pronounced at lower areal densities of the molded anti-ballistic articles. Especially for high end grades such deficiency becomes apparent when lower panel areal densities and thickness are enabled through their good ballistic performance under perpendicular conditions. Accordingly the present invention is especially relevant in ballistic protections with reduced areal densities. Therefor an preferred embodiment of the present invention concerns ballistic-resistant molded articles wherein the molded article has an AD of at most 13.0, preferably of at most 12.0, more preferably of at most 11.0 and most preferably of at most 10.0 kg/m$^2$. It was observed that hybridizing the panel with monolayers of type B is especially advantageous at these lower areal densities of the ballistic-resistant molded article. It reduces or cancels the deficit of state of the art materials in catching projectiles impacting under an angle. Accordingly low weight anti-ballistic solutions are made available that show high V50 performances under both perpendicular and non-perpendicular conditions.

The ballistic-resistant molded article of the invention comprises monolayers B having an areal density of the oriented polymer of between 4 and 28 g/m$^2$ per monolayer. It was shown that combining monolayer with such low oriented polymer areal densities substantially improves the non-perpendicular impact performance of molded articles with monolayers of higher areal densities of oriented polymer. In a preferred embodiment of the invention, the monolayers B present in the ballistic-resistant molded article have an areal density of oriented polymer B of between 6 and 26 g/m$^2$, preferably of between 8 and 25 g/m$^2$, more preferably between 10 and 24 g/m$^2$, and most preferably between 12 and 22 g/m$^2$. Monolayers with such preferred low areal densities will allow to increase the number of monolayers present in a ballistic-resistant article and positively affect the V50 performance thereof. The lower limit of the monolayer B areal density is given by thickness of the filaments or tapes present therein as well as production efficiency, since low areal density monolayer will negatively impact equipment output. To heavy monolayers B will not show the required performance improvement under non-perpendicular impact conditions.

In a preferred embodiment the monolayers B of the ballistic-resistant article have an areal density of polyethylene filaments or polyethylene tapes between 6 and 26 g/m$^2$, preferably of between 8 and 25 g/m$^2$, more preferably between 10 and 24 g/m$^2$, and most preferably between 12 and 22 g/m$^2$. The areal density of polyethylene filaments or tapes in the monolayer is understood to be the mass of the polyethylene of the high performance polyethylene filaments present in a given area of the monolayer divided by its surface area, expressed in gram per square meter. The areal density of polyethylene filaments or tapes may also be computed based on the areal density of the monolayer, multiplied by the mass fraction of polyethylene present in the monolayer.

A preferred embodiment of the present invention concerns a ballistic-resistant molded article comprising monolayers wherein the monolayers B are composite monolayers of unidirectionally aligned tapes or filaments of oriented polyethylene and a binder B. Composite monolayers and their manufacture are generally known in the art as for example described in WO2005066401 and WO2017060469. Preferably the process comprises applying the binder, in any form, such as a solution, an emulsion or an aqueous dispersion of the binder to the monolayers of the unidirectionally aligned filaments or tapes. The obtained impregnated monolayers will be dried to form composite monolayers. Said composite monolayers may on their turn be pre-assembled to form composite sheets by cross-plying and compression molding 2 or more composite monolayers. Accordingly, such composite sheets comprises at least two adjacent monolayers of unidirectionally aligned filaments or tapes embedded in a binder. Herewith is understood that the filaments or tapes are in a parallel array arrangement also known as unidirectional (UD) arrangement, which may be obtained by any of a variety of conventional techniques. The binder will be present throughout the composite monolayer, substantially embedding the filaments therein and binding the filaments or tapes of the monolayer together.

An alternative preferred embodiment of the present invention concerns a ballistic-resistant molded article wherein the monolayers B each comprise a layer of unidirectionally aligned filaments or tapes of oriented polyethylene substantially free of binder and a layer of binder B, wherein adjacent layers of unidirectionally aligned filaments or tapes of oriented polyethylene substantially free of binder are adhered to each other by said binder B. Accordingly the filament or tape layers of the monolayers B are substantially free of any binder or matrix material between the polyethylene comprising filaments or tapes of said monolayer. It was observed that in the absence of binders or matrix materials within the layer of filaments or tapes, the ballistic properties of the ballistic-resistant article of the invention may be improved. In the context of the present invention, by substantially free of binder is understood that the layer of unidirectionally aligned filaments or tapes of oriented polyethylene does contain less than 2.0 wt% of a binder wherein the weight percentage is the weight of the binder in respect of the weight of the polyethylene filaments or tape. Preferably substantially free of refers to less than 1.0 wt%, more preferably to less than 0.5 wt% of binder present within the layer of unidirectionally aligned filaments or tapes.

A layer of unidirectionally aligned filaments or tapes of oriented polyethylene which layer is substantially absent of a bonding matrix is typically formed from fusing of filaments. Fusing is preferably achieved under a combination of pressure, temperature and time which results in substantially no melt bonding. Preferably, there is no detectable melt bonding as detected by DSC (10°C/min). No detectable melt bonding means that no visible endothermic effect consistent with partially melted recrystallized fibers is detected, when the sample is analyzed in triplicate. Preferably, fusing is mechanical fusing. Mechanical fusing is thought to occur by deformation of filaments leading to increased mechanical interlocking of parallel arranged filaments and increased van der Waals interaction between filaments. Accordingly, the filaments within a layer are typically fused. Therefore, the monolayer may have good structural stability without any bonding matrix or adhesive being present. Further, it may have good structural stability without any melting of filaments.

A layer of unidirectionally aligned filaments or tapes oriented polyethylene substantially absent a bonding matrix may be formed by subjecting a parallel array of filaments to elevated temperature and pressure. The means for applying pressure may be a calender, a smoothing unit, a double belt press or an alternating press. A preferred manner of applying pressure is by introducing an array of unidirectionally oriented fibers to the nip of calender, substantially as described in WO 2012/080274 A1.

Typically, a layer of unidirectionally aligned filaments or tapes of oriented polyethylene substantially free of binder has a thickness of from 4 to 28 $\mu$m, preferably between 6 and 26 $\mu$m, more preferably between 8 and 25 $\mu$m, and most preferably between 10 and 24 $\mu$m. Thickness of a layer may be measured by taking an average of three measurements, for example using microscopy. Such thickness excludes the layer of binder material which is located inbetween the layers of unidirectionaly aligned filaments or tapes.

In the present alternative embodiment of the invention, the adjacent layers of unidirectionally aligned filaments or tapes of oriented polyethylene substantially absent of a binder are separated and adhered to each other by layers of said binder. The term binder, in the present context also called adhesive, refers to a material that binds adjacent layers of unidirectionally aligned filaments or tapes together. The adhesive may provide structural rigidity to the monolayers or pre-assembled sheets of multiple cross-plied monolayers. It also acts to improve inter-layer bonding between adjacent monolayers of unidirectionally aligned fibers in the molded article of the present invention. In the molded article of the present invention, the adhesive forms a layer between adjacent layers of unidirectionally aligned filaments or tapes. Typical and preferred binders have been discussed above.

In the context of the present embodiment, the adhesive typically does not penetrate substantially into the layers of unidirectionally aligned filaments of oriented polyethylene. Preferably, the adhesive does not penetrate at all into the layers. Accordingly, the adhesive does not act as a bonding agent between filaments within a single monolayer of unidirectionally aligned filaments. Preferably the ballistic-resistant molded article comprises a plurality of layers of unidirectionally aligned filaments which layers are substantially absent a bonding matrix; and layers of adhesive present in between said adjacent filament layers. Preferably the adhesive is present in between all adjacent layers of unidirectionally aligned filaments of oriented polyethylene.

For the inventive embodiment of ballistic-resistant molded article comprising fibrous monolayers B comprising layers of unidirectionally aligned filaments of oriented polyethylene being substantially free of binder and wherein the adjacent fibrous layers are adhered to each other by layers of the binder, the molded article may be formed by alternately stacking the required number of monolayers comprising polyethylene filaments and adhesive layers. The process to produce such article would be cumbersome in view of the high amount of layers to be stacked. An intermediate product in the form of sheets comprising a certain number of alternating layers of filament layers and adhesive layers represents hence an interesting product to simplify the manufacture of the ballistic-resistant molded article of the invention.

Therefor an embodiment of the invention concerns ballistic-resistant pre-assembled sheet, i.e. precursor sheet, whereby such ballistic-resistant sheet comprising at least 2 fibrous layers, each fibrous layer containing unidirectionally aligned filaments of oriented polyethylene, whereby the direction of orientation between the polyethylene filaments of two adjacent fibrous layers in the sheet differ by at least 40 and up to 90 degree, the polyethylene filaments having a tenacity of at least 3.5 N/tex, wherein the ballistic-resistant sheet comprises between 5.0 and 20 wt% of a binder based on the weight of the filaments of oriented polyethylene, wherein the fibrous layer of unidirectionally aligned filaments of oriented polyethylene are substantially free of binder and wherein adjacent fibrous layers are separated by the binder, wherein the fibrous layers of the ballistic-resistant sheet have each an areal density of between 4 and 28 $g/m^2$ per layer of unidirectionally aligned filaments of oriented polyethylene present in the ballistic-resistant sheet, preferably between 6 and 26 $g/m^2$, more preferably between 8 and 25 $g/m^2$ and most preferably between 10 and 24 $g/m^2$. Accordingly the ballistic-resistant sheet has preferably an areal density of filaments of oriented polyethylene of between 8 and 56 $g/m^2$ for a 2 fibrous layer comprising sheet, of between 16 and 112 $g/m^2$ for a 4 fibrous layer comprising sheet, of between 24 and 168 $g/m^2$ for a 6 fibrous layer comprising sheet and of between 32 and 224 $g/m^2$ for a 8 fibrous layer comprising sheet. More preferably the ballistic-resistant sheet has an areal density (AD) of filaments of oriented polyethylene of between 12 and 52 $g/m^2$ for a 2 fibrous layer comprising sheet, of between 24 and 104 $g/m^2$ for a 4 fibrous layer comprising sheet and of between 36 and 156 $g/m^2$ for a 6 fibrous layer comprising sheet and of between 48 and 208 $g/m^2$ for a 8 fibrous layer comprising sheet, most preferably the ballistic-resistant sheet has an areal density (AD) of filaments of oriented polyethylene of between 20 and 48 $g/m^2$ for a 2 fibrous layer comprising sheet, of between 40 and 96 $g/m^2$ for a 4 fibrous layer comprising sheet and of between 60 and 144 $g/m^2$ for a 6 fibrous layer comprising sheet and of between 80 and 192 $g/m^2$ for a 8 fibrous layer comprising sheet.

In the ballistic-resistant article or sheet of the present embodiment the adhesive layer may comprise a complete layer, for example a film; a continuous partial layer, for example a web; or a disperse partial layer, for example spots or islands of adhesive. The amount of binder in the ballistic-resistant sheet according to the present embodiment of the invention may vary within wide ranges and will especially depend upon the required final properties of the ballistic-resistant curved molded article as well as the nature of the filaments of oriented polyethylene present in the fibrous layers. Typically the amount of binder present in the ballistic-resistant sheet is between 5.0 and 20 wt%. In a preferred embodiment said concentration of binder between 6.0 and 17 wt%, preferably between 7.0 and 14 wt%, most preferably between 8.0 and 12 wt%, whereby the weight percentage is the weight of binder to the total weight of the ballistic-resistant sheet.

The sheets of the present embodiment comprise fibrous layers substantially free of binder between the polyethylene comprising filaments of such a layer. It was observed that in the absence of binders materials within the layer of filaments, the ballistic properties of the ballistic-resistant article of the invention may be improved. A layer of unidirectionally aligned filaments of oriented polyethylene which fibrous layer is substantially free of a bonding matrix is typically formed from fusing of filaments, preferably, fusing is mechanical fusing by deformation of filaments leading to increased mechanical interlocking of parallel arranged filaments and increased van der Waals interaction between filaments. Accordingly, the filaments within a layer are typically partly fused one to another. Therefore, the monolayer may have good structural stability without any bonding matrix or adhesive being present. Further, it may have good structural stability without any melting of filaments.

The ballistic-resistant molded articles according to the present invention have outstanding anti-ballistic performance against a variety of projectiles, amongst which the threat commonly known as AK47 bullet, more precisely the 7.62 x 39 mm MSC, when shot under non-perpendicular conditions, i.e. a shot impacting the article at an angle deviating by 30° from perpendicular at the position of impact. Amongst others, the ballistic-resistant molded articles of the invention may outperform on a weight basis ballistic performance of state of the art solutions. Accordingly a preferred embodiment concerns a ballistic-resistant molded article according to the invention wherein the molded article has a V50 when shot at an angle of 30° from perpendicular (V50↘) of at least 600 m/s when tested against an AK47 7.62 x 39 mm MSC projectile on a molded article with an areal density of 9.8 $kg/m^2$ measured as described in the Methods. Preferably the V50↘ under said conditions is at least 650 m/s, more preferably at least 700 m/s and most preferably at least 750 m/s.

But more importantly the inventors observed that the ballistic performance of the ballistic-resistant molded article according to the invention show improved anti-ballistic performance compared to a ballistic-resistant article solely comprising monolayers A as the ballistic-resistant component. While replacing a weight fraction of monolayers A by higher performance monolayers B would be expected to improve the overall ballistic performance, it was surprisingly observed that the performance under a non-perpendicular impact could substantially be improved when shot with the 7.62 x 39 mm MSC by a shot hitting at an angle deviating by 30° from the perpendicular impact. It is the core achievement of the present inventors to develop an anti-ballistic molded article that improve the performance of state of the art materials when hit in a non-perpendicular manner. Therefor a preferred embodiment concerns a ballistic-resistant molded article according to the present invention having a V50 when shot at an angle of 30° from perpendicular (V50↘) of at least 600 m/s when tested against an AK47 7.62 x 39 mm MSC projectile on a molded article with an areal density of 9.8 kg/m$^2$, and wherein $X^A$ is the weight fraction of monolayers A in the stack of monolayers, $X^B$ is the weight fraction of monolayers B in the stack of monolayers, $V50^A_\searrow$ is the V50 when shot at an angle of 30° from perpendicular of a ballistic-resistant molded article solely comprising monolayers A, $V50^B_\searrow$ is the V50 when shot at an angle of 30° from perpendicular of a ballistic-resistant molded article solely comprising monolayers B, wherein $V50_\searrow > 1.05 * [X^A * V50^A_\searrow + X^B * V50^B_\searrow]$, wherein $V50_\searrow$, $V50^A_\searrow$ and $V50^B_\searrow$ are tested against an AK47 7.62 x 39 mm MSC projectile measured as described in the Methods at identical areal density of the respective ballistic-resistant molded articles. Preferably, the ballistic resistant molded article has a $V50_\searrow > 1.08 * [X^A * V50^A_\searrow + V50^B_\searrow * X^B]$, more preferably the $V50_\searrow > 1.10 * [X^A * V50^A_\searrow + V50^B_\searrow * X^B]$.

A further embodiment of the invention concerns a ballistic-resistant molded article comprising a consolidated stack comprising between 50 wt% and 95 wt% monolayers A and 5 wt% and at most 50 wt% monolayers B based on the total weight of monolayers A and monolayers B, the consolidated stack having an areal density (AD) of at least 7.0 and at most 15.0 kg/m$^2$, the monolayers A and the monolayers B comprising oriented polymer A and oriented polymer B respectively, whereby the direction of orientation of the oriented polymers of two adjacent monolayers in the stack differs by at least 40 and up to 90 degree, wherein the ballistic resistant molded article has a V50 when shot at an angle (26) of 30° from perpendicular ($V50_\searrow$) according to formula (1)

$$V50_\searrow > 1.05 * [X^A * V50^A_\searrow + V50^B_\searrow * X^B] \quad (1)$$

whereby $X^A$ is the weight fraction of monolayers A in the stack of monolayers, $X^B$ is the weight fraction of monolayers B in the stack of monolayers, $V50^A_\searrow$ is the V50 when shot at an angle of 30° from perpendicular of a ballistic-resistant molded article solely comprising monolayers A, $V50^B_\searrow$ is the V50 when shot at an angle of 30° from perpendicular of a ballistic-resistant molded article solely comprising monolayers B, wherein $V50_\searrow$, $V50^A_\searrow$ and $V50^B_\searrow$ are tested against an AK47 7.62 x 39 mm MSC projectile at identical areal density of the respective ballistic-resistant molded articles.. Preferably, the ballistic resistant molded article has a $V50_\searrow > 1.08 * [X^A * V50^A_\searrow + V50^B_\searrow * X^B]$, more preferably the $V50_\searrow > 1.10 * [X^A * V50^A_\searrow + V50^B_\searrow * X^B]$.

Preferably, the monolayers B of the ballistic-resistant molded article are composite monolayers of layers of unidirectionally aligned filaments or tapes of oriented polyethylene and layers of a binder B. In an alternative preferred embodiment, the monolayers B comprise fibrous layers of unidirectionally aligned filaments of oriented polyethylene which are substantially free of binder and the adjacent fibrous layers are adhered to each other by layers of the binder B.

A preferred field of application of the ballistic-resistant molded article of the invention is in the field of ballistic resistant articles such as armors. The function of a ballistic resistant article is two-fold, it should stop fast projectiles, and it should do so with a minimum back face deformation. Back face deformation is effectively the size of the impact dent measurable on the non-impact side of the article. Typically it is measured in mm of greatest deformation perpendicular to the plane of the impacted surface of the ballistic resistant article. It was surprisingly observed that the size of the impact dent is small, if composite sheets made according to the present invention are used in armor. In other words, the back face signature is small. Such armor is especially suitable for combat helmet shells, because they show reduced back face signature on stopping projectiles, thus reducing trauma on the human skull and brain after being hit by a stopped projectile.

The invention is further explained by means of the following examples, without being limited thereto.

Test methods as referred to in the present application, are as follows:

- IV: the Intrinsic Viscosity is determined according to method ASTM D1601 (2004) at 135°C in decalin, the dissolution time being 16 hours, with BHT (Butylated Hydroxy Toluene) as anti-oxidant in an amount of 2 g/l solution, by extrapolating the viscosity as measured at different concentrations to zero concentration.

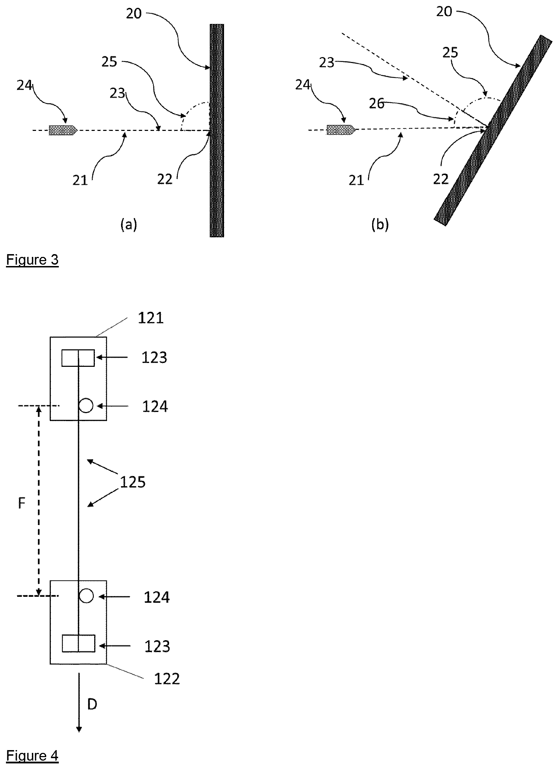

  - Determination of filament linear density and mechanical properties (Filament tenacity and filament tensile modulus) is carried out on a semiautomatic, microprocessor controlled tensile tester (Favimat, tester no. 37074, from Textechno Herbert Stein GmbH & Co. KG, Mönchengladbach, Germany) which works according to the principle of constant rate of extension (DIN 51 221, **DIN 53** 816, ISO 5079) with integrated measuring head for linear density measurement according to the vibroscopic testing principle using constant tensile force and gauge length and variable exciting frequency (ASTM D 1577). The Favimat tester is equipped with a 1200 cN balance, no. 14408989. The version number of the Favimat software: 3.2.0.
  Clamp slippage during filament tensile testing, preventing filament fracture, is eliminated by adaption of the Favimat clamps according to figure 4.
  The upper clamp 121 is attached to the load cell (not shown). The lower clamp 122 moves in downward direction (D) with selected tensile testing speed during the tensile test. The filament (125) to be tested, at each of the two clamps, is clamped between two jaw faces 123 (4x4x2 mm) made from Plexiglass® and wrapped three times over ceramic pins 124. Prior to tensile testing, the linear density of the filament length between the ceramic pins is determined vibroscopically. Determination of filament linear density is carried out at a filament gauge length (F) of 50 mm (see figure 4), at a pretension of 2.50 cN/tex (using the expected filament linear density calculated from yarn linear density and number of filaments). Subsequently, the tensile test is performed at a test speed of the lower clamp of 25 mm/min with a pretension of 0.50 cN/tex, and the filament tenacity is calculated from the measured force at break and the vibroscopically determined filament linear density. The elongational strain is determined by using the whole filament length between the upper and lower plexiglass jaw faces at the defined pretension of 0.50 cN/tex. The beginning of the stress-strain curve shows generally some slackness and therefore the modulus is calculated as a chord modulus between two stress levels. The Chord Modulus between e.g. 10 and 15 cN/dtex is given by equation (1):

$$\text{Chord Modulus between } 10 \text{ and } 15 \text{ cN/dtex} = CM(10:15) = \frac{50}{\varepsilon_{15} - \varepsilon_{10}} \text{ (N/tex)} \qquad (1)$$

where:

$\varepsilon_{10}$ = elongational strain at a stress of 10 cN/dtex (%); and
$\varepsilon_{15}$ = elongational strain at a stress of 15 cN/dtex (%).

The measured elongation at break is corrected for slackness as by equation (2):

$$EAB = EAB\,(\text{measured}) - (\varepsilon_5 - \frac{50}{CM(5:10)}) \qquad (2)$$

where:

EAB = the corrected elongation at break (%)
EAB (measured) = the measured elongation at break (%)
$\varepsilon_5$ = elongational strain at a stress of 5 cN/dtex (%)
CM(5:10) = Chord Modulus between 5 and 10 cN/dtex (N/tex).

- Areal density (AD) of a panel, sheets or monolayer was determined by measuring the weight of a sample of preferably 0.4 m × 0.4 m with an error of 0.1 g. In molded panels of the invention, areal density of a monolayer or a sheet may be determined, by measuring the thickness of a single or multiple monolayers and multiplying the determined thickness by the density of the concerned monolayer or sheet.
- Ballistic performance of molded articles was determined by calculating the V50 value of 8 individual shots on 8 individual panels. The square sample panels (Figure 4, 20) had the dimension of 200 mm x 200 mm with the fiber orientations being respectively parallel two its sides. The sample panels were fixed behind a target holder frame (not shown in figure 4) with one side parallel to the ground and maintained in place by a small piece of adhesive tape. The shooting distance was 10 meters and the shots were aimed at the center (22) of the panel (20). Projectile (24) used is 7.62 x 39 mm MSC (AK47) as for example supplied by Sellier and Bellot, Czech Republic. The first shot is fired at a projectile speed (V50) at which it is anticipated that 50% of the shots would be stopped. If a stop is obtained, the next shot is fired at an anticipated speed being 40 m/s higher than the previous speed. If a perforation occurs, the next shot is fired at an anticipated speed 40 m/s lower than the previous speed. The speed of the projectile was measured 1 meter before the impact. The result for the experimentally obtained V50 value is the mean average of the four highest stops and the four lowest perforations. When there is a surplus on stops or penetrations, then these surpluses needed to be eliminated until the number of shots that resulted in a stop and the number of shots that resulted in a penetration are the same. This is accomplished by the elimination of the stops with lowest shooting velocity, or the elimination of the penetrations with the highest shooting velocity. In the unlikely event (when testing at 30 degree angle) that the bullet exits the panel at the edge, then this specific shot is invalid and should not be taken in account in the V50 calculation.

For V501 testing (Figure 4a), the target holder (not shown) is positioned such that the line of fire (21) of the projectile (24) is orthogonal (angle 25 of 90°) to the panel (20) at the place of impact (22), i.e. the line of fire (21) is identical to the normal (23) at the place of impact (22).
For V50↘ testing (Figure 4b), the target holder (not shown) is rotated by an angle of 30° on its vertical axis, such that the line of fire (21) of the projectile (24) forms an angle (26) of 30° to the normal (23) at the place of impact (22). For the avoidance of doubt, the angle between the panel (20) and the line of fire (21) will hence be of 60°.

Precursor sheet A

A precursor sheet A was produced from Dyneema® 880 dtex SK99 (DSM, The Netherlands). The yarns were unwound from bobbins on a tension controlled creel and passed through a reed. Subsequently the yarns were spread to form a gap-less bed of filaments with a width of about 550 mm by feeding the yarns over a spreading unit. The spread yarns were then fed into a calender. The rolls of the calender had a diameter of 400 mm and the applied line pressure was 2000 N/cm. The line operated at a line speed of 8 m/min and at a roll surface temperature of 154°C. In the calender the yarns were fused into a fibrous tape. The tape was removed from the calender by the first roller-stand. A powder scattering unit was placed between the calender and the first roller-stand applying about 10 wt.% relative to the fibrous tape of binder Queo 1007 powder, available from Borealis, Vienna, Austria to the upper surface of the tape. The tape with powder was calendered at elevated temperature and wound. Fibrous tapes with a width of about 550 mm and a total areal density of 37 $g/m^2$ was produced. The areal density of the highly oriented polyethylene in the tape was 33.6 $g/m^2$.

Three of said fibrous tapes were aligned in parallel and abutting to form 1600 mm wide monolayer A. A second, identical, monolayer of five tapes was formed on top of the first monolayer, with the adhesive layers of both monolayers facing upwards, but with the fibers of adjacent monolayers aligned perpendicularly. A two-layered, cross-plied precursor sheet A having an areal density of 74 $g/m^2$ was produced.

Precursor sheet B

The process for precursor sheet A was repeated except that the areal density of the produced fibrous tape was reduced by lowering the number of yarns fed to the process. Accordingly fibrous monolayers with a total areal densities of 27 $g/m^2$ have been produced, the areal density of the highly oriented polyethylene in monolayers was 24.5 $g/m^2$ and a matrix content of about 10 wt%.

Of said monolayers four-layered, cross-plied precursor sheets B having areal densities of 108 $g/m^2$ have been produced.

Comparative Experiments (CE) 1.1

133 precursor sheets A with dimensions of 400 by 400 mm were stacked, making sure the alternating 0°/90° direction of the filaments was maintained. The stacks of precursor sheets had an areal densities of 9.78 $kg/m^2$. The stack of precursor sheets was pressed into a molded article at 16.5 MPa and 145°C for 40 minutes followed by a cooling period of 20 min at 2 MPa. The obtained panels were cut into 4 equal squares of 200 by 200 mm for further testing.

The molded panels were tested at a 30° impact with a 7.62 x 39 mm MSC (AK47) bullet in order to determine ballistic performances as reported in table 2.

Comparative Experiment (CE) 1.2

Similar to CE1.1, 91 precursor sheets B have been stacked and compression molded to obtain panels solely comprising monolayers B.

Example 1.1 to 1.3

Hybrid panels comprising 90, 80 and 70 wt% of monolayers A and 10, 20 and 30 wt% of monolayers B respectively, have been manufactured by first stacking the corresponding number of 400 by 400 mm precursor sheets A followed by the corresponding amount of 400 by 400 mm precursor sheets B. The stack was compression molded and cut into 200 by 200 mm panels as described in CE 1.1. The details of the ballistic panels can be found in table 1. The sides with the monolayers B of the molded panels were shot with a 7.62 x 39 mm MSC (AK47) bullet in order to determine V50 at 30° angled conditions of which the results are reported in table 2.

As can be observed, the V50↘ of the panels of Ex 1.1 to 1.3 substantially outperform the panel of CE 1 solely comprising monolayers A, but said panels also show substantially higher V50↘ than what would have been expected based on a linear average calculation of the V50↘ of the individual panels of CE 1.1 and 1.2 (Column "Expected V50↘"). For example replacing 10 wt% of monolayers A of the panel CE 1.1 by 10wyt% of monolayers B should theoretically increase the V50↘ of the panel by about 15 m/s, while Example 1.1 shows an actual V50↘ of 848 m/s, an improvement of nearly 120m/s.

Table 1

|  | Panel areal density [kg/m$^2$] | Monolayers A /panel | Monolayers B /panel | Monolayer A fraction wt% | Monolayers B fraction wt% |
|---|---|---|---|---|---|
| Ex 1.1 | 9.78 | 238 | 36 | 90 | 10 |
| Ex 1.2 | 9.78 | 212 | 72 | 80 | 20 |
| Ex 1.3 | 9.78 | 186 | 108 | 70 | 30 |
| CE 1.1 | 9.78 | 266 | - | 100 | - |
| CE 1.2 | 9.78 | - | 364 | - | 100 |

Table 2

|  | V50↓ [m/s] | V50↘ [m/s] | Δ V50 [%] | Expected V50↘ [m/s] |
|---|---|---|---|---|
| Ex 1.1 | 910 | 848 | -7 | 743 |
| Ex 1.2 | 903 | 810 | -10 | 757 |
| Ex 1.3 | 888 | 859 | -3 | 771 |
| CE 1.1 | 840 | 730 | -13% | - |
| CE 1.2 | 876 | 867 | -1% | - |

**Claims**

1. A ballistic-resistant molded article comprising a consolidated stack comprising between 50 wt% and 95 wt% monolayers A and 5 wt% and at most 50 wt% monolayers B based on the total weight of monolayers A and monolayers B, the consolidated stack having an areal density (AD) of at least 7.0 and at most 15.0 kg/m$^2$, the monolayers A and the monolayers B comprising oriented polymer A and oriented polymer B respectively, whereby the direction of orientation of the oriented polymers of two adjacent monolayers in the stack differs by at least 40 and up to 90 degree, wherein the monolayers A have an areal density of between 28 and 80 g/m$^2$ of the oriented polymer A and the monolayers B having an areal density of between 4 and 28 g/m$^2$ of the oriented polymer B, wherein the areal density of the oriented polymer A in the monolayers A is at least 5 g/m$^2$ higher than the areal density of the oriented polymer B in the monolayers B.

2. The ballistic-resistant molded article of claim 1 wherein the monolayers B contain unidirectionally aligned tapes or filaments of oriented polyethylene, said tapes or filaments having a tenacity of at least 3.5 N/tex.

3. The ballistic-resistant molded article of claim 1 or 2 wherein at least 50 wt% of the monolayers B are stacked adjacent to one another, forming a sub-stack of monolayers B, preferably at least 80 wt% of the monolayers B form a sub-stack of monolayers B, more preferably substantially all monolayers B form a sub-stack of monolayers B.

4. The ballistic-resistant molded article of claim 3 wherein the sub-stack of monolayers B is located at an outside surface of the molded article, preferably the sub-stack of monolayers B forms the strike-face of the molded article.

5. The ballistic-resistant molded article of any of the preceding claims, wherein the monolayers A comprise between 5.0 and 20 wt% of a binder A, based on the weight of the oriented polymer A present in monolayer A and/or the monolayers B comprise between 5.0 and 20 wt% of a binder B, based on the weight of the oriented polymer B present in monolayer B.

6. The ballistic-resistant molded article of any one of the preceding claims wherein the monolayers A contain unidirectionally aligned tapes or filaments of oriented polyethylene, said tapes or filaments having a tenacity of at least 2.0 N/tex.

7. The ballistic-resistant molded article of any one of the preceding claims wherein the molded article has an areal density (AD) of at most 13.0, preferably of at most 12.0, more preferably of at most 11.0 and most preferably of at most 10.0 kg/m$^2$.

8. The ballistic-resistant molded article of any of the preceding claims, wherein the monolayers B have a areal density of oriented polymer B of between 6 and 26 g/m$^2$, preferably of between 8 and 25 g/m$^2$, more preferably between 10 and 24 g/m$^2$, and most preferably between 12 and 22 g/m$^2$.

9. The ballistic-resistant molded article of claims 1 to 8 wherein the monolayers B are composite monolayers of unidirectionally aligned tapes or filaments of oriented polyethylene and a binder B.

10. The ballistic-resistant molded article of claims 1 to 8, wherein the monolayers B each comprise a layer of unidirectionally aligned filaments of oriented polyethylene substantially free of binder and a layer of binder B, wherein adjacent layers of unidirectionally aligned filaments of oriented polyethylene substantially free of binder are adhered to each other by said binder B.

11. The ballistic-resistant molded article of claims 1 to 10 wherein the molded article has a V50 when shot at an angle (26) of 30° from perpendicular (V50$_\searrow$) of at least 600 m/s when tested against an AK47 7.62 x 39 mm MSC projectile at an areal density of the molded article of 9.8 kg/m$^2$.

12. The ballistic-resistant molded article according to claim 1 to 11, wherein the ballistic resistant molded article has a V50 when shot at an angle (26) of 30° from perpendicular (V50$_\searrow$) according to formula (1)

$$V50_\searrow > 1.05 * [X^A * V50^A_\searrow + V50^B_\searrow * X^B] \quad (1)$$

whereby $X^A$ is the weight fraction of monolayers A in the stack of monolayers, $X^B$ is the weight fraction of monolayers B in the stack of monolayers, V50$^A_\searrow$ is the V50 when shot at an angle of 30° from perpendicular of a ballistic-resistant molded article solely comprising monolayers A, V50$^B_\searrow$ is the V50 when shot at an angle of 30° from perpendicular of a ballistic-resistant molded article solely comprising monolayers B, wherein V50$_\searrow$, V50$^A_\searrow$ and V50$^B_\searrow$ are tested against an AK47 7.62 x 39 mm MSC projectile at identical areal density of the respective ballistic-resistant molded articles.

13. The ballistic resistant molded article according to claim 12 having a

$$V50_\searrow > 1.08 * [X^A * V50^A_\searrow + V50^B_\searrow * X^B],$$

more preferably a

$$V50_\searrow > 1.10 * [X^A * V50^A_\searrow + V50^B_\searrow * X^B].$$

**Patentansprüche**

1. Durchschusshemmender Formkörper umfassend einen verfestigten Stapel, der zwischen 50 Gew.-% und 95 Gew.-% Monoschichten A und 5 Gew.-% bis höchstens 50 Gew.-% Monoschichten B, bezogen auf das Gesamtgewicht der Monoschichten A und Monoschichten B, umfasst, wobei der verfestigte Stapel eine Flächendichte (AD) von wenigstens 7,0 und höchstens 15,0 kg/m$^2$ aufweist, wobei die Monoschichten A und die Monoschichten B orientiertes Polymer A bzw. orientiertes Polymer B umfassen, wobei sich die Orientierungsrichtung der orientierten Polymere von zwei benachbarten Monoschichten in dem Stapel um wenigstens 40 und bis zu 90 Grad unterscheidet, wobei die Monoschichten A eine Flächendichte von zwischen 28 und 80 g/m$^2$ an dem orientierten Polymer A aufweisen und die Monoschichten B eine Flächendichte von zwischen 4 und 28 g/m$^2$ an dem orientierten Polymer B aufweisen, wobei die Flächendichte des orientierten Polymers A in den Monoschichten A wenigstens 5 g/m$^2$ höher ist als die Flächendichte des orientierten Polymers B in den Monoschichten B.

2. Durchschusshemmender Formkörper nach Anspruch 1, wobei die Monoschichten B unidirektional ausgerichtete Bänder oder Filamente aus orientiertem Polyethylen enthalten, wobei die Bänder oder Filamente eine Festigkeit von wenigstens 3,5 N/tex aufweisen.

3. Durchschusshemmender Formkörper nach Anspruch 1 oder 2, wobei wenigstens 50 Gew.-% der Monoschichten B benachbart zueinander gestapelt sind, um einen Teilstapel von Monoschichten B zu bilden, vorzugsweise wenigstens 80 Gew.-% der Monoschichten B einen Teilstapel von Monoschichten B bilden, bevorzugter im Wesentlichen alle Monoschichten B einen Teilstapel von Monoschichten B bilden.

4. Durchschusshemmender Formkörper nach Anspruch 3, wobei der Teilstapel von Monoschichten B an einer Außenfläche des Formkörpers angeordnet ist, wobei vorzugsweise der Teilstapel von Monoschichten B die Beschussseite des Formkörpers bildet.

5. Durchschusshemmender Formkörper nach einem der vorstehenden Ansprüche, wobei die Monoschichten A zwischen 5,0 und 20 Gew.-% an einem Bindemittel A, bezogen auf das Gewicht des in der Monoschicht A vorhandenen orientierten Polymers A, umfassen und/oder die Monoschichten B zwischen 5,0 und 20 Gew.-% an einem Bindemittel B, bezogen auf das Gewicht des in der Monoschicht B vorhandenen orientierten Polymers B, umfassen.

6. Durchschusshemmender Formkörper nach einem der vorstehenden Ansprüche , wobei die Monoschichten A unidirektional ausgerichtete Bänder oder Filamente aus orientiertem Polyethylen enthalten, wobei die Bänder oder Filamente eine Festigkeit von wenigstens 2,0 N/tex aufweisen.

7. Durchschusshemmender Formkörper nach einem der vorstehenden Ansprüche, wobei der Formkörper eine Flächendichte (AD) von höchstens 13,0, vorzugsweise von höchstens 12,0, bevorzugter von höchstens 11,0 und höchst bevorzugt von höchstens 10,0 kg/m$^2$ aufweist.

8. Durchschusshemmender Formkörper nach einem der vorstehenden Ansprüche, wobei die Monoschichten B eine Flächendichte des orientierten Polymers B von zwischen 6 und 26 g/m$^2$, vorzugsweise zwischen 8 und 25 g/m$^2$, bevorzugter zwischen 10 und 24 g/m$^2$ und höchst bevorzugt zwischen 12 und 22 g/m$^2$ aufweisen.

9. Durchschusshemmender Formkörper nach Ansprüchen 1 bis 8 , wobei die Monoschichten B Verbund-Monoschichten aus unidirektional ausgerichteten Bändern oder Filamenten aus orientiertem Polyethylen und einem Bindemittel B sind.

10. Durchschusshemmender Formkörper nach Ansprüchen 1 bis 8, wobei die Monoschichten B jeweils eine Schicht von unidirektional ausgerichteten Filamenten aus orientiertem Polyethylen, die im Wesentlichen frei von Bindemittel sind, und eine Schicht von Bindemittel B umfassen, wobei benachbarte Schichten von unidirektional ausgerichteten Filamenten aus orientiertem Polyethylen, die im Wesentlichen frei von Bindemittel sind, durch das Bindemittel B aneinander haften.

11. Durchschusshemmender Formkörper nach Ansprüchen 1 bis 10, wobei der Formkörper einen V50 bei Beschuss unter einem Winkel (26) von 30° von der Senkrechten (V50$_\searrow$) von wenigstens 600 m/s aufweist, wenn geprüft gegen ein AK47 7,62 x 39 mm MSC-Geschoß bei einer Flächendichte des Formkörpers von 9,8 kg/m$^2$.

12. Durchschusshemmender Formkörper nach Anspruch 1 bis 11, wobei der durchschusshemmende Formkörper einen V50 bei Beschuss unter einem Winkel (26) von 30° von der Senkrechten (V50$_\searrow$) gemäß Formel (1) aufweist,

$$V50_\searrow > 1,05 * [X^A * V50^A_\searrow + V50^B_\searrow * X^B] \quad (1)$$

wobei $X^A$ der Gewichtsanteil von Monoschichten A in dem Stapel von Monoschichten ist, $X^B$ der Gewichtsanteil von Monoschichten B in dem Stapel von Monoschichten ist, V50$^A_\searrow$ der V50 bei Beschuss unter einem Winkel von 30° von der Senkrechten eines durchschusshemmenden Formkörpers, der ausschließlich Monoschichten A umfasst, ist, V50$^B_\searrow$ der V50 bei Beschuss unter einem Winkel von 30° von der Senkrechten eines durchschusshemmenden Formkörpers, der ausschließlich Monoschichten A umfasst, ist, wobei V50$_\searrow$, V50$^A_\searrow$ und V50$^B_\searrow$ gegen ein AK47 7,62 x 39 mm MSC-Geschoß bei gleicher Flächendichte der entsprechenden durchschusshemmenden Formkörper geprüft werden.

13. Durchschusshemmender Formkörper nach Anspruch 12 mit einem V50$_\searrow$ > 1,08 * [$X^A$ * V50$^A_\searrow$ + V50$^B_\searrow$ * $X^B$], bevorzugter einem V50$_\searrow$ > 1,10 * [$X^A$ * V50$^A_\searrow$ + V50$^B_\searrow$ * $X^B$].

## Revendications

1. Article moulé résistant aux balles comprenant un empilement consolidé comprenant entre 50 % en poids et 95 % en poids de monocouches A et 5 % en poids et au plus 50 % en poids de monocouches B, par rapport au poids total de monocouches A et de monocouches B, l'empilement consolidé ayant une densité surfacique (AD) d'au moins 7,0 et d'au plus 15,0 kg/m$^2$, les monocouches A et les monocouches B comprenant respectivement un polymère orienté A et un polymère orienté B, moyennant quoi la direction d'orientation des polymères orientés de deux monocouches adjacentes dans l'empilement diffère d'au moins 40 et jusqu'à 90 degrés, les monocouches A présentant une densité surfacique comprise entre 28 et 80 g/m$^2$ du polymère orienté A et les monocouches B présentant une densité surfacique comprise entre 4 et 28 g/m$^2$ du polymère orienté B, dans lequel la densité surfacique du polymère orienté A dans les monocouches A est supérieure d'au moins 5 g/m$^2$ à la densité surfacique du polymère orienté B dans les monocouches B.

2. Article moulé résistant aux balles selon la revendication 1, dans lequel les monocouches B contiennent des rubans ou filaments alignés unidirectionnellement de polyéthylène orienté, lesdits rubans ou filaments ayant une ténacité d'au moins 3,5 N/tex.

3. Article moulé résistant aux balles selon la revendication 1 ou 2, dans lequel au moins 50 % en poids des monocouches B sont empilées les unes à côté des autres, formant un sous-empilement de monocouches B, de préférence au moins 80 % en poids des monocouches B forment un sous-empilement de monocouches B, plus préférablement sensiblement toutes les monocouches B forment un sous-empilement de monocouches B.

4. Article moulé résistant aux balles selon la revendication 3, dans lequel le sous-empilement de monocouches B est situé au niveau d'une surface extérieure de l'article moulé, de préférence le sous-empilement de monocouches B forme la face de frappe de l'article moulé.

5. Article moulé résistant aux balles selon l'une quelconque des revendications précédentes, dans lequel les monocouches A comprennent entre 5,0 et 20 % en poids d'un liant A, par rapport au poids du polymère orienté A présent dans la monocouche A et/ou les monocouches B comprennent entre 5,0 et 20 % en poids d'un liant B, par rapport au poids du polymère orienté B présent dans la monocouche B.

6. Article moulé résistant aux balles selon l'une quelconque des revendications précédentes, dans lequel les monocouches A contiennent des rubans ou filaments alignés unidirectionnellement de polyéthylène orienté, lesdits rubans ou filaments ayant une ténacité d'au moins 2,0 N/tex.

7. Article moulé résistant aux balles selon l'une quelconque des revendications précédentes, dans lequel l'article moulé a une densité surfacique (AD) d'au plus 13,0, de préférence d'au plus 12,0, plus préférablement d'au plus 11,0 et le plus préférablement d'au plus 10,0 kg/m$^2$.

8. Article moulé résistant aux balles selon l'une quelconque des revendications précédentes, dans lequel les monocouches B ont une densité surfacique de polymère orienté B comprise entre 6 et 26 g/m$^2$, de préférence entre 8 et 25 g/m$^2$, plus préférablement entre 10 et 24 g/m$^2$, et le plus préférablement entre 12 et 22 g/m$^2$.

9. Article moulé résistant aux balles selon les revendications 1 à 8, dans lequel les monocouches B sont des monocouches composites de rubans ou filaments alignés unidirectionnellement de polyéthylène orienté et d'un liant B.

10. Article moulé résistant aux balles selon les revendications 1 à 8, dans lequel les monocouches B comprennent chacune une couche de filaments alignés unidirectionnellement de polyéthylène orienté sensiblement exempts de liant et une couche de liant B, dans lequel des couches adjacentes de filaments alignés unidirectionnellement de polyéthylène orienté sensiblement exempts de liant sont collées les unes aux autres par ledit liant B.

11. Article moulé résistant aux balles selon les revendications 1 à 10, dans lequel l'article moulé a une V50 lorsque l'on tire à un angle (26) de 30° par rapport à la perpendiculaire (V50↘) d'au moins 600 m/s lorsqu'il est testé contre un projectile MSC d'AK47 de 7,62 x 39 mm à une densité surfacique de l'article moulé de 9,8 kg/m$^2$.

12. Article moulé résistant aux balles selon les revendications 1 à 11, dans lequel l'article moulé résistant aux balles a une V50 lorsque l'on tire à un angle (26) de 30° par rapport à la perpendiculaire (V50↘) selon la formule (1)

$$V50_{↘} > 1,05 * [X^A * V50^A_{↘} + V50^B_{↘} * X^B] \quad (1)$$

$X^A$ est la fraction pondérale de monocouches A dans l'empilement de monocouches, $X^B$ est la fraction pondérale de monocouches B dans l'empilement de monocouches, $V50^A_\searrow$ est la V50 lorsque l'on tire à un angle de 30° par rapport à la perpendiculaire d'un article moulé résistant aux balles comprenant uniquement des monocouches A, $V50^B_\searrow$ est la V50 lorsque l'on tire à un angle de 30° par rapport à la perpendiculaire d'un article moulé résistant aux balles comprenant uniquement des monocouches B, dans lequel $V50_\searrow$, $V50^A_\searrow$ et $V50^B_\searrow$ sont testées contre un projectile MSC d'AK47 de 7,62 x 39 mm à une densité surfacique identique des articles moulés résistant aux balles respectifs.

13. Article moulé résistant aux balles selon la revendication 12, ayant une $V50_\searrow > 1{,}08 * [X^A * V50^A_\searrow + V50^B_\searrow * X^B]$, plus préférablement une $V50_\searrow, > 1{,}10 * [X^A * V50^A_\searrow + V50^B_\searrow * X^B]$.

Fig 1

Fig. 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012150169 A
- WO 2008077605 A
- EP 1699954 A
- WO 13131996 A
- WO 20127187 A
- US 10655940 B2
- US 2021088312 A1
- WO 2010066819 A
- US 5091133 A

- GB 2042414 A
- GB 2051667 A
- EP 0205960 A
- WO 0173173 A1
- EP 2205928 A
- WO 2005066401 A
- WO 2017060469 A
- WO 2012080274 A1

**Non-patent literature cited in the description**

- Advanced Fibre Spinning Technology. Woodhead Publ. Ltd, 1994